(19) Europäisches Patentamt
European Patent Office
Office européen des brevets

(11) Numéro de publication : **0 233 815 B1**

(12) **FASCICULE DE BREVET EUROPEEN**

(45) Date de publication du fascicule du brevet :
15.05.91 Bulletin 91/20

(51) Int. Cl.⁵ : **G11B 5/596**

(21) Numéro de dépôt : 87400184.5

(22) Date de dépôt : 27.01.87

(54) **Procédé d'écriture et de lecture d'une piste magnétique, notamment pour l'asservissement positionnel de têtes magnétiques; support magnétique comportant au moins une telle piste; procédé d'asservissement positionnel de têtes magnétiques mettant en oeuvre de telles pistes.**

(30) Priorité : 27.01.86 FR 8601099

(43) Date de publication de la demande :
26.08.87 Bulletin 87/35

(45) Mention de la délivrance du brevet :
15.05.91 Bulletin 91/20

(84) Etats contractants désignés :
BE CH DE ES GB IT LI NL SE

(56) Documents cités :
EP-A- 0 094 314
FR-A- 2 228 266
FR-A- 2 383 496
GB-A- 2 065 335
US-A- 3 534 344
US-A- 4 499 511
US-A- 4 539 607

(56) Documents cités :
PATENT ABSTRACTS OF JAPAN, vol. 3, no. 150 (E-158), 11 décembre 1979, page 158 E 158; & JP-A-54 131 910 (FUJITSU K.K.) 13-10-1979
IBM TECHNICAL DISCLOSURE BULLETIN, vol. 26, no. 10B, mars 1984, pages 5475-5476, New York, US; M.R. CONDRON et al.: "Adjacent data track interleaving"

(73) Titulaire : **SOCIETE D'APPLICATIONS GENERALES D'ELECTRICITE ET DE MECANIQUE SAGEM**
**6, Avenue d'Iéna**
**F-75783 Paris Cédex 16 (FR)**

(72) Inventeur : **Garcia, Salvador**
**3 rue Lavoisier**
**F-93500 Pantin (FR)**
Inventeur : **Dmitruk, Boris**
**140 Bis Boulevard du Général de Gaulle**
**F-78700 Conflans St. Honorine (FR)**

(74) Mandataire : **Picard, Jean-Claude Georges et al**
**Cabinet Plasseraud 84, rue d'Amsterdam**
**F-75009 Paris (FR)**

## Description

La présente invention concerne essentiellement le positionnement d'une tête magnétique d'écriture et/ou de lecture par rapport à un support à mémoire magnétique tel qu'un disque.

Actuellement, on connaît essentiellement deux types de positionneurs : les positionneurs en boucle ouverte, et les positionneurs en boucle fermée.

Dans le cas du positionnement en boucle ouverte, le moteur du positionneur est du type pas à pas, et c'est la précision et la vitesse de ce moteur qui conditionnent les performances globales de la mémoire.

Le positionnement en boucle fermée doit être utilisé lorsque, les densités d'enregistrement augmentant, les performances mécaniques demandées augmentent aussi considérablement. La précision nécessaire du positionnement est obtenue alors en mesurant à l'aide d'un capteur la position de la tête, et en la corrigeant en permanence par le moteur – en général un moteur de type électrodynamique.

C'est ce type de positionnement en boucle fermée que concerne la présente invention.

Dans ce cas, la précision du positionnement est en grande partie conditionnée par la précision du capteur précité, qui mesure le positionnement de la tête. Pour obtenir une mesure de position directe, ce capteur est constitué dans les mémoires à disques par une tête magnétique et son disque associé ; on exploite alors une information écrite à cet effet sur le disque.

Lorsque l'on utilise une pile de disques, l'information d'asservissement peut être écrite sur une surface dite "dédiée" d'un des disques, dont l'autre face, de même que les autres disques, porte les informations proprement dites ; on a alors un asservissement par servo-surface. Bien entendu, le "peigne" qui porte toutes les têtes d'écriture et de lecture doit être rigoureusement indéformable, car toutes les têtes doivent être très précisément positionnées par rapport à celle qui sert à l'asservissement en position.

Selon une autre méthode, l'information d'asservissement est intercalée par secteurs sur toutes les pistes destinées à mémoriser l'information, donc sur chaque disque ; c'est ce que l'on appelle l'asservissement "entrelacé", qui permet d'atteindre une plus grande précision, du fait que chaque tête s'asservit par rapport à sa piste. Il est à noter que dans ce cas les secteurs d'asservissement de toutes les pistes sont alignés radialement pour une question de synchronisation, et que plusieurs secteurs de positionnement sont prévus sur chaque piste pour réactualiser l'information d'asservissement tout au long du disque ; devant chaque secteur d'information se trouve par conséquent un petit secteur destiné au positionnement.

Une autre méthode encore peut combiner les deux précédentes lorsque l'on désire obtenir de grandes vitesses de lecture.

Ceci étant, il y a lieu de noter encore ce qui suit, relativement à l'état antérieur de la technique tel qu'il peut être illustré par le document US-A-4 499 511. Lorsque l'on écrit sur une piste magnétique, celle-ci peut prendre deux états magnétiques qui sont représentés par des flèches → et ← en enregistrement longitudinal.

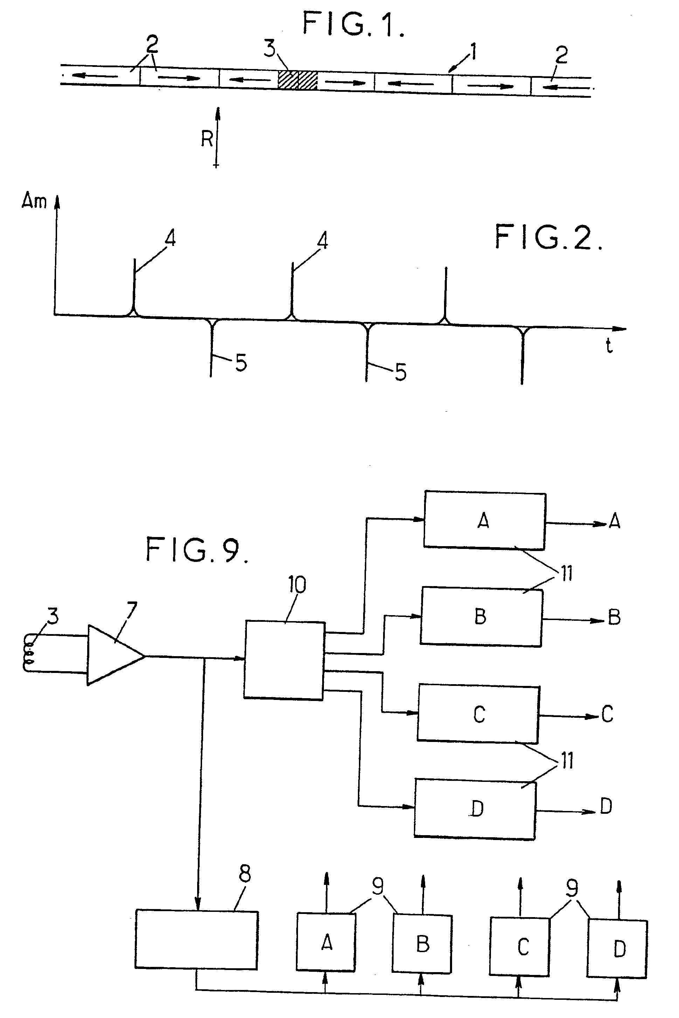

Lorsqu'une tête magnétique lit ces signaux, elle est sensible uniquement aux changements de sens d'orientation de la couche magnétique. Le signal obtenu à la sortie de la tête est celui représenté à la figure 2 du dessin ci-annexé, dans lequel la figure 1 représente schématiquement la piste en question, avec ses états magnétiques alternativement → et ← .

Sur la figure 1 la piste d'asservissement est référencée 1 et porte différentes zones 2 d'égales longueurs, ayant alternativement l'état magnétique → et l'état magnétique ← . Le signal obtenu à la sortie d'une tête de lecture schématisée en 3 est positif (en 4) quand la transition se fait de ← vers → et négatif (en 5) pour des transitions se faisant de → vers ← . Sur la figure 2 le temps est en abscisses, le disque portant la piste d'asservissement 1 étant supposé tourner à vitesse constante devant la tête de lecture 3 (la direction radiale du disque est schématisée par la flèche R sur la figure 1).

On va voir maintenant les difficultés de traitement qu'entraîne l'existence de ces signaux positifs 4 et négatifs 5 de la figure 2 lorsque l'on désire les utiliser pour réaliser un asservissement en position des têtes d'écriture et de lecture.

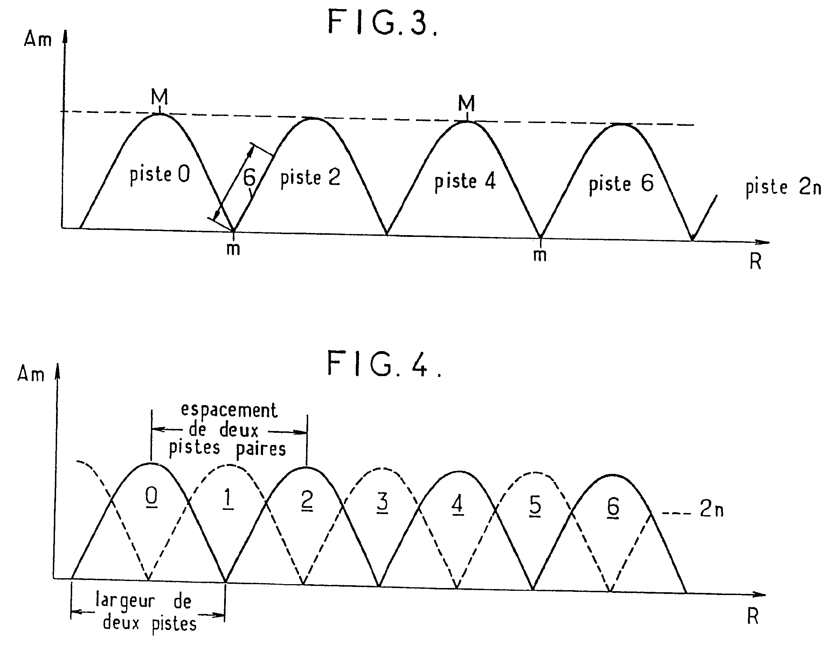

Lorsque la tête 3 se déplace de part et d'autre de la piste 1 dans la direction R, l'amplitude du signal diminue à partir d'un maximum, lequel est obtenu lorsque la tête 3 est centrée sur la piste 1, comme cela a été représenté dans la vue en plan de la figure 1. C'est à partir de cette variation d'amplitude que sera obtenue l'information de position. Cette variation d'amplitude a été représentée à la figure 3.

Sur cette figure on a supposé que la tête 3 se déplace radialement au-dessus de plusieurs pistes analogues à la piste 1, séparées par des espaces ayant un seul sens de magnétisation et par exemple de même largeur que les pistes 1, le disque portant ces pistes étant en rotation. On voit que l'amplitude des signaux est égale à l'amplitude crête-crête des signaux 4 et 5, obtenue lorsque la tête 3 reste centrée sur une piste. Quant à la "période" spatiale du signal de la figure 3, elle correspond à l'écartement entre deux pistes ; le signal est maximum en M, lorsque la tête est centrée sur la piste considérée, et nul en m, lorsque la tête est à mi-chemin entre deux pistes d'asservissement telles que 1.

Les pistes ainsi que les signaux correspondants peuvent être numérotés de deux en deux, de 0 à $2n$.

Théoriquement, le signal de la figure 3 devrait être triangulaire, mais ses pointes M sont arrondies, du fait de la définition finie de la lecture. La seule partie commodément utilisable du signal de la figure 3 est constituée par ses zones linéaires telles que celle référencée en 6 (au niveau des sommets M la précision de la mesure serait nulle). Pour pouvoir disposer pour toute position de la tête 3 d'un signal dont la variation est linéaire, on ajoute au signal de la figure 3 un signal provenant de l'écriture d'une piste décalée d'une largeur de piste par rapport aux pistes telles que 1.

On obtient alors un signal linéaire pour tout rayon, comme le montre la figure 4 du dessin ci-annexé, sur laquelle les signaux, correspondant aux pistes successives, ont été numérotés à la suite, de 0 à 2n. Ainsi les signaux pairs sont ceux des premières pistes, tels que représentés à la figure 3, et les signaux impairs ceux des pistes décalées (en pointillés sur la figure 4).

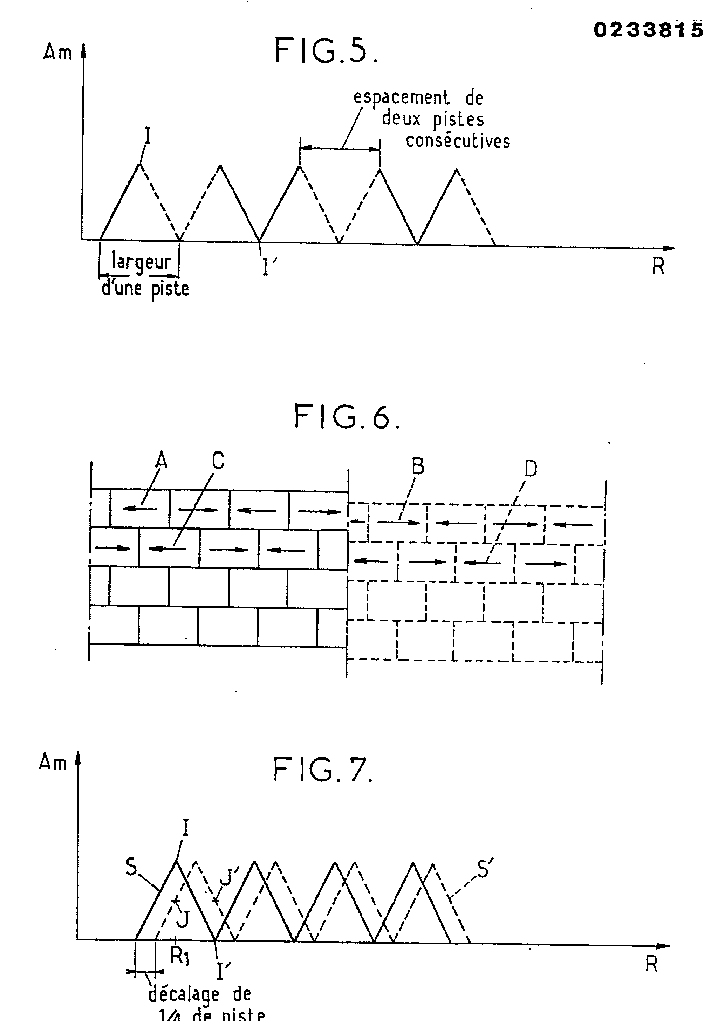

Le signal réellement utile (après suppression des sommets arrondis) est celui représenté à la figure 5, et qui ne présente donc plus que des parties linéaires; celles indiquées en traits pleins proviennent des pistes paires et celles en pointillés proviennent des pistes impaires. La période du signal est alors égale à la largeur d'une piste.

Cependant on remarque qu'aux sommets I et aux creux I' la variation du signal de position n'est pas univoque, puisque le positionnement radial de la tête de lecture peut aussi bien être croissant que décroissant lorsque le signal lu décroît à partir de I ou croît à partir de I'.

Pour lever cette indétermination, on ajoute au signal de la figure 5 un signal provenant de l'écriture de signaux du même type que les précédents mais décalés radialement d'un quart de largeur de piste et également décalés dans le temps, puisque écrits sur des secteurs décalés angulairement par rapport aux secteurs normaux. Sur la figure 6, on a représenté de tels secteurs décalés, le secteur normal correspondant aux pistes A, C... et le secteur décalé correspondant aux pistes décalées d'un quart de largeur B, D...

On obtient alors les deux signaux en S et S' en quadrature représentés à la figure 7, qui permettent de déterminer de manière univoque, pour une période complète, la position de la tête sur le disque et son sens de déplacement.

En effet, on voit sur cette figure que le sommet I et le creux I' des signaux S (dessinés en traits pleins) des secteurs normaux correspondent respectivement à des emplacements J et J' situés tous deux à mi-pente du signal S' (dessiné en pointillés) écrit sur le secteur décalé.

Par exemple, si le signal S décroît à partir de I et que le signal S' croit, on saura que la tête 3 se déplace à partir de R1 vers les rayons croissants, tandis que si alors S' décroît on saura que la tête se déplace à partir de R1 vers les rayons décroissants, ce qui lève effectivement toute ambiguité sur le sens de déplacement de la tête.

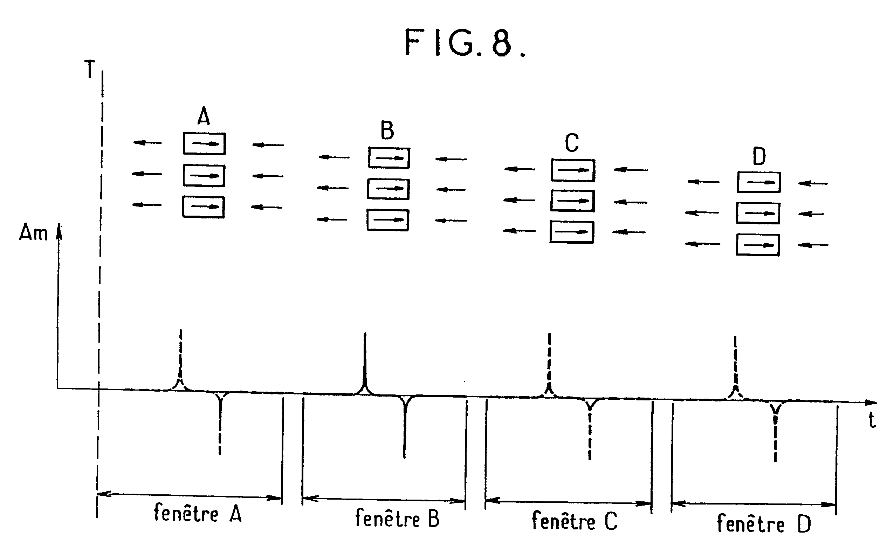

Compte tenu du décalage dans le temps, les signaux correspondant aux transitions sur les pistes A, C sont intercalés par rapport à ceux provenant des pistes B et D, ci qui a été montré sur la représentation temporelle de la figure 8. Sur cette figure on a supposé que la tête lit la piste B ; c'est pourquoi seul le signal de la piste B est en trait plein. Les signaux des autres pistes sont en traits pointillés pour indiquer qu'ils ne sont pas présents ; les pointillés indiquent donc seulement les emplacements prévus pour les signaux lorsque les autres pistes A, C et D sont lues. Ceci peut être obtenu par ouvertures successives de fenêtres A, B, C, D en des instants déterminés à partir d'un top de synchronisation représenté par la ligne verticale en tirets T.

Sur la figure 8, il est à noter que l'on a représenté les états magnétiques sous la forme de blocs A, B, C, D ayant un état magnétique donné $\rightarrow$ , toute la surface extérieure à ces blocs ayant l'état magnétique opposé $\leftarrow$ . L'entrée de la tête dans chaque bloc par la gauche fournit donc une transition $\longleftrightarrow$ et par suite un signal positif, et la sortie de chaque bloc par la droite fournit une transition $\rightarrow\leftarrow$ et donc un signal négatif.

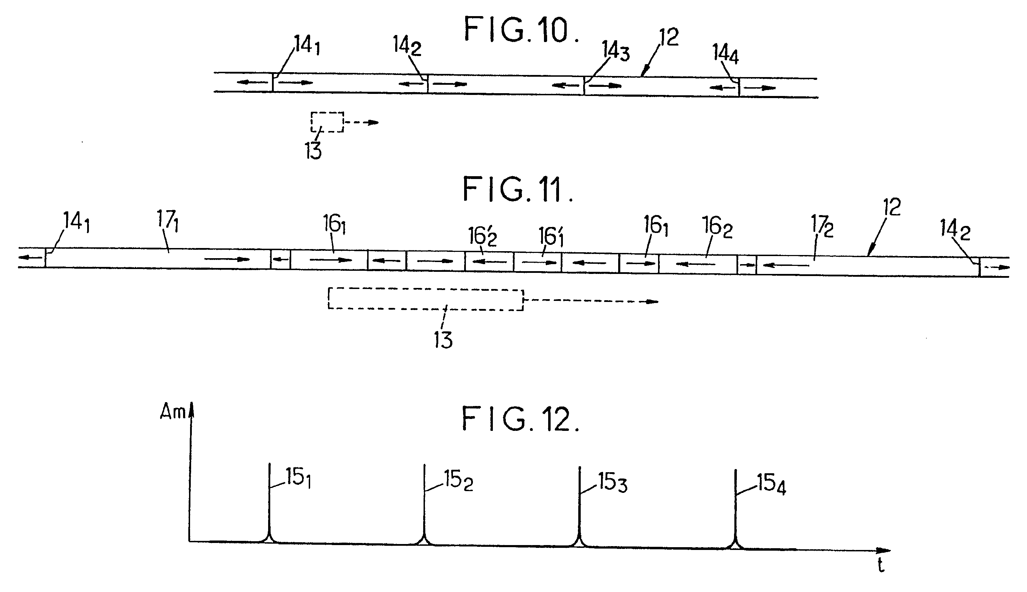

Le synoptique du circuit électronique d'asservissement classique qui permet d'obtenir les signaux de position de la tête à partir du signal composite de la figure 8 a été représenté à la figure 9, dans laquelle :
- 3 désigne la tête de lecture ;
- 7 un amplificateur ;
- 8 un détecteur du top de synchronisation T commandant quatre fenêtres 9 pour la lecture des pistes A, B, C et D ;
- 10 un détecteur de crête ; et
- 11 quatre échantillonneurs-bloqueurs reliés respectivement aux quatre fenêtres et fournissant les signaux normaux A, C et les signaux en quadrature B et D.

On voit que la technique antérieure, telle qu'elle vient d'être décrite, est très complexe, tant par ses principes que par les moyens techniques qui doivent être mis en oeuvre pour appliquer ces principes.

L'inconvénient fondamental de cette technique antérieure réside dans le fait que les signaux d'asservissement obtenus à la sortie des échantillonneurs ne peuvent l'être en permanence mais sont hachés dans le temps, puisqu'ils sont obtenus par détection de crête, échantillonnage et blocage. Le signal est donc entaché d'incertitude, et la vitesse d'accès est limitée.

La présente invention se propose de remédier à ces inconvénients de la technique antérieure, et ceci en partant de l'observation selon laquelle la complication de cette technique provient de la présence, apparemment inévitable, des transitions de deux types différents ( $\rightarrow\leftarrow$ et $\longleftrightarrow$ ) entre les deux états magnétiques des pistes utilisées pour l'asservissement en position.

A cet effet, un but premier de l'invention est d'obtenir des pistes ayant un seul type de transition lisible, entre ses états magnétiques.

Un but second est d'obtenir un procédé d'asservissement en position pouvant utiliser de telles pistes.

La présente invention concerne donc en premier lieu un procédé d'écriture et de lecture d'une piste magnétique, notamment pour l'asservissement positionnel de têtes magnétiques, cette piste portant à cet effet des transitions d'états magnétiques telles que leur lecture fournit des impulsions dont le signe est représentatif du sens de la transition.

Selon l'invention, un tel procédé se caractérise essentiellement en ce que l'on enregistre dans l'intervalle compris entre deux transitions de même sens des signaux tels que leur lecture ne fasse pas apparaître une transition lisible de sens inverse, de sorte que toutes les transitions utiles et lisibles de la magnétisation d'une même piste d'asservissement apparaissent dans le même sens.

Concrètement, cela peut être obtenu par le fait que lesdits signaux enregistrés dans l'intervalle compris entre deux transitions de même sens sont alternativement de deux types, à savoir d'un premier type dont l'état magnétique est le même que celui de la zone de laquelle la tête d'enregistrement s'éloigne (le support de la piste magnétique étant supposé en défilement), et d'un second type dont l'état magnétique est le même que celui de la zone de laquelle la tête d'enregistrement se rapproche, dans le sens considéré la largeur des signaux du premier type étant progressivement décroissante et la largeur des signaux du second type étant progressivement croissante, la largeur maximale (au milieu de l'intervalle considéré) de deux signaux successifs de types différents étant suffisamment faible par rapport à la largeur d'entrefer de la tête de lecture pour que leur transition, non plus que les transitions entre les autres signaux, ne puisse être lue par la tête de lecture.

Ceci est rendu possible par le fait que la lecture s'effectue avec une moins grande définition que l'écriture, car la lecture s'effectue sur une grande largeur de tête (largeur de l'entrefer) alors que l'écriture s'effectue avec le bord arrière de la tête.

Par analogie avec une lecture optique et en assimilant un état magnétique au noir et l'état magnétique opposé au blanc, on aurait ainsi une bande qui (supposée défilant dans un seul sens) présenterait à l'oeil uniquement des transitions noir-blanc, mais aucune transition brusque blanc-noir, l'intervalle entre deux transitions franches noir-blanc apparaissant à l'oeil comme un gris variable allant progressivement du blanc au noir.

Un support magnétique obtenu d'après le procédé défini plus haut et comportant au moins une piste portant des transitions d'états magnétiques telles que leur lecture fournit des impulsions dont le signe est représentatif du sens de la transition, sera donc, conformément à l'invention, essentiellement caractérisé en ce que cette piste ne présente à la lecture que des transitions d'état magnétique ayant toutes le même sens ( →← ou ←→ ).

Plus précisément, un tel support pourra encore être caractérisé en ce qu'il présente dans l'intervalle compris entre deux transitions d'états magnétiques de même sens, des états magnétiques alternativement de deux types, à savoir d'un premier type qui, lorsque l'on observe la piste d'une transition à la suivante, est le même que celui de la zone dont on s'éloigne, et d'un second type qui, lorsque l'on observe la piste dans le même sens, est le même que celui de la zone dont on se rapproche, dans le sens considéré la largeur des zones du premier type étant progressivement décroissante et la largeur des zones du second type étant progressivement croissante, la largeur maximale (au milieu de l'intervalle considéré) de deux zones successives de types différents étant suffisamment faible par rapport à la largeur d'entrefer de la tête de lecture pour que leur transition, non plus que les transitions entre les autres zones, ne puisse être lue par cette tête de lecture.

La présente invention concerne encore un procédé d'asservissement positionnel de têtes magnétiques mettant en oeuvre le support magnétique qui vient d'être défini.

Selon l'invention, un tel procédé sera caractérisé en ce que l'on élabore les signaux de positionnement par la lecture :

– de deux pistes consécutives (A et C) obtenues conformément au procédé des revendications 1 ou 2, de sorte à obtenir des transitions d'un premier type sur l'une des pistes et des transitions d'un second type, décalées par rapport aux précédentes, sur l'autre piste ; et

– de deux pistes consécutives (B et D) obtenues conformément au procédé des revendications 1 ou 2, de sorte à obtenir des transitions d'un premier type sur l'une des pistes et des transitions d'un second type, décalées par rapport aux précédentes, sur l'autre piste ;

ces pistes ayant été écrites par deux têtes magnétiques rigidement solidaires (18 pour les pistes A et C et 19 pour les pistes B et D), de telle manière qu'un décalage radial des têtes sur une distance égale à un quart de largeur de piste fasse passer la lecture d'une piste à la suivante (dans l'ordre alphabétique), alternativement par les deux têtes (18, 19) ;

lesdits signaux de positionnement étant alors obtenus après amplification et détection du signe des signaux produits par lesdites têtes magnétiques.

On va voir maintenant, à la lecture de la description qui suit d'un exemple d'utilisation d'un tel support, en quoi il permettra de simplifier considérablement un système d'asservissement positionnel de tête magnétique.

Dans le dessin ci-annexé :

– la figure 10 représente schématiquement, en plan, une piste écrite sur un support magnétique selon un procédé conforme à l'invention, avec indication des seules transitions d'état magnétique qui peuvent être lues par une tête ;

– la figure 11 représente schématiquement, en plan, la piste de la figure 10, mais avec en outre la représentation des transitions intermédiaires qui ne peuvent être lues par la tête, et ceci avec une échelle agrandie dans la direction de la piste;

– la figure 12 représente les signaux émis par la tête magnétique de lecture lorsqu'elle lit les pistes écrites conformément à l'invention (l'echelle est celle de la figure 10) ;

– La figure 13 montre en plan deux pistes A et C d'un support magnétique conforme à l'invention, les signaux correspondants issus de la tête magnétique de lecture étant représentés à la figure 14 ;

– la figure 15 montre en plan les deux pistes A et cet deux autres pistes B et D radialement décalées par rapport aux précédentes et écrites grâce à une autre tête magnétique rigidement solidaire de la précédente ; et

– la figure 16 est le schéma synoptique des circuits électroniques de mise en forme pour l'obtention des signaux de positionnement dans un procédé d'asservissement de position conforme à l'invention.

Sur les figures 10 et 11, la piste écrite conformément à l'invention est référencée 12. Les transitions d'état magnétique qui peuvent être lues par la tête référencée en 13 (en étant représentée décalée par rapport à la piste 12, pour plus de clarté) ont été indiquées en $14_1$, $14_2$, $14_3$ et $14_4$. On voit que toutes ces transitions sont les mêmes. Sur la figure 10, on a représenté à titre d'exemple des transitions $\longleftrightarrow$ propres à fournir sur la tête les signaux positifs $15_1$, $15_2$, $15_3$ et $15_4$ représentés à la figure 12.

Le schéma de la figure 10 peut paraître tout à fait paradoxal lorsque l'on connaît l'état antérieur de la technique tel que décrit plus haut avec référence à la figure 1. En effet, on voit sur la figure 10 que chaque zone comprise entre deux transitions successives 14 devrait présenter à la fois deux états magnétiques différents, selon que l'on se trouve à proximité de l'une des transitions ou à proximité de l'autre.

Pour obtenir ce résultat surprenant sans transition intermédiaire lisible par la tête, on écrit la piste 12 de la façon schématisée à la figure 11 (avec une échelle agrandie dans la direction de la piste dans la proportion de 1 à 6 environ), cette figure ne représentant que la partie de piste comprise entre deux transitions 14 successives (les transitions $14_1$ et $14_2$).

On enregistre donc sur la piste, conformément à ce qui a été indiqué plus haut, des signaux de deux types, à savoir d'un premier type, lesquels sont référencés en $16_1$, et d'un second type, lesquels sont référencés en $16_2$. Les signaux $16_1$ ont un état magnétique schématisé par $\rightarrow$ et les signaux $16_2$ un état magnétique schématisé par $\leftarrow$. Si l'on considère que la tête magnétique d'enregistrement et de lecture 13 se déplace, par rapport à la piste 12, dans le sens indiqué par la flèche, les signaux $16_1$ du premier type ont le même état magnétique que celui de la zone $17_1$ de laquelle la tête 13 s'éloigne, et les signaux $16_2$ du second type ont le même état magnétique que celui de la zone $17_2$ de laquelle la tête 13 se rapproche ; en allant de la zone $17_1$ à la zone $17_2$, les signaux $16_1$ ont une largeur progressivement décroissante, et les signaux $16_2$ une largeur progressivement croissante.

Il est important que la piste 12 présente la caractéristique complémentaire selon laquelle, au milieu de l'intervalle $17_1$-$17_2$, la largeur maximale de deux zones successives $16'_2$-$16'_1$ soit suffisamment faible, vis-à-vis de la largeur de l'entrefer de la tête, pour que celle-ci ne puisse lire aucune transition à cet emplacement. La tête 13 ne lira donc bien que des transitions toutes de même sens, à savoir les transitions $\longleftrightarrow$ référencées 14 sur la figure 10 (ou, le cas échéant, des transitions de sens inverse).

Des supports magnétiques portant des pistes sur lesquelles les transitions sont toutes de même sens pourront trouver une application particulièrement intéressante dans un système d'asservissement positionnel de têtes magnétiques, en permettant de simplifier grandement la technique antérieure décrite plus haut, et d'obtenir en même temps de meilleures performances et une plus grande fiabilité.

Un tel asservissement peut être réalisé de la façon suivante :

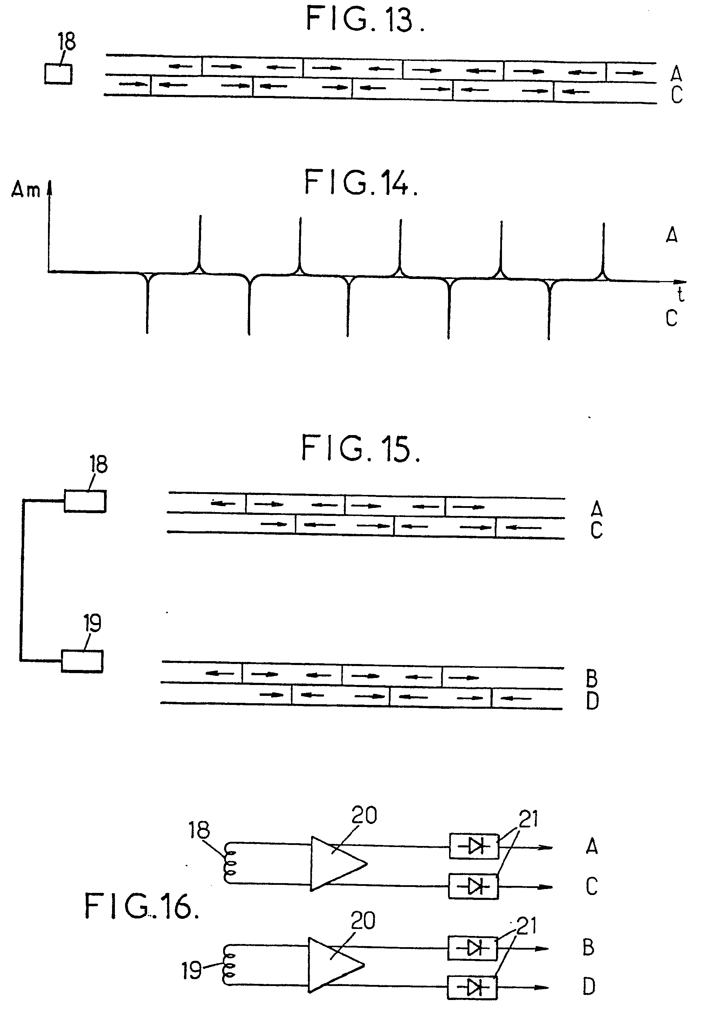

Premièrement, on enregistre sur deux pistes consécutives A et C du support magnétique des signaux faisant apparaître respectivement des transitions $\longleftrightarrow$ et des transitions $\rightarrow\leftarrow$, ces transitions étant décalées (voir figure 13). Comme ces transitions n'ont qu'un seul sens sur chaque piste (au lieu de deux sens opposés selon la technique antérieure), le signe des impulsions qui sont obtenues à la lecture est directement représentatif d'une piste : la piste A pour les impulsions positives produites par les transitions $\longleftrightarrow$, et la piste C pour les impulsions négatives produites par les transitions $\rightarrow\leftarrow$ (voir la figure 14, sur laquelle on a supposé une lecture effectuée par une tête magnétique 18 centrée entre les pistes A et C).

En d'autres termes, on a réussi de la sorte à remplacer un codage temporel du signal par un codage de signe. Le signal de la figure 14 peut être lu en permanence, sans fenêtres ni synchronisation.

Deuxièmement, à l'aide d'une tête 19 rigidement solidaire de la tête 18, on enregistre sur deux autres pistes consécutives B et D des signaux faisant apparaître des transitions du même type, à savoir toutes ←→ pour la piste B, et toutes →← pour la piste D, ces deux pistes étant, par rapport aux pistes A et C, radialement décalées de telle sorte qu'un déplacement radial des têtes sur un quart de largeur de piste permette de passer de la lecture des pistes A ou C à la lecture des pistes B ou respectivement D. Pour l'enregistrement des transitions sur ces quatre pistes, on peut donc procéder de la façon suivante :

– on écrit la piste A avec la tête 18 ;

– on décale les deux têtes 18-19 radialement d'une demi-largeur de piste et l'on écrit la piste B à l'aide de la tête 19 ;

– on décale encore les têtes de la même distance et l'on écrit la piste C avec la tête 18 ; et

– après un nouveau décalage identique, on écrit la piste D avec la tête 19 (voir figure 15).

Grâce à l'apport d'une deuxième tête de lecture, on a donc réussi à remplacer un rodage temporel – nécessitant une synchronisation et l'ouverture de fenêtres – par un codage de signe (positif ou négatif), et par un codage spatial.

On peut alors obtenir un signal de positionnement avec des circuits électroniques de mise en forme beaucoup plus simples que ceux de la figure 9, puisque les signaux de positionnement fournis par les têtes 18-19 sont disponibles en permanence, sans avoir à être "discrétisés" par des opérations d'échantillonnage-blocage. Ceci présente l'avantage de permettre d'utiliser des mémoires rapides, et donc de rendre l'asservissement en position plus précis que dans la technique antérieure.

De plus, le risque d'erreur de positionnement est éliminé, là encore du fait de la permanence des signaux de positionnement.

Le schéma synoptique de la figure 16, dans laquelle la référence 20 désigne des amplificateurs différentiels et la référence 21 des dispositifs détecteurs de signe, montre bien cette simplicité des circuits électroniques de mise en forme pour l'obtention des signaux de positionnement A, C et B, D à partir des signaux fournis par les têtes 18 et 19.

## Revendications

1. Procédé d'écriture et de lecture d'une piste magnétique, notamment pour l'asservissement positionnel de têtes magnétiques, cette piste portant à cet effet des transitions d'états magnétiques telles que leur lecture fournit des impulsions dont le signe est représentatif du sens de la transition, caractérisé en ce que l'on enregistre dans l'intervalle compris entre deux transitions (14) de même sens des signaux ($16_1$, $16_2$) tels que leur lecture ne fasse pas apparaître une transition lisible de sens inverse, de sorte que toutes les transitions utiles et lisibles de la magnétisation d'une même piste d'asservissement apparaissent dans le même sens.

2. Procédé selon la revendication 1, caractérisé en ce que lesdits signaux enregistrés dans l'intervalle compris entre deux transitions de même sens sont alternativement de deux types, à savoir d'un premier type ($16_1$) dont l'état magnétique est le même que celui de la zone ($17_1$) de laquelle la tête d'enregistrement (13) s'éloigne (le support de la piste magnétique (12) étant supposé en défilement), et d'un second type ($16_2$) dont l'état magnétique est le même que celui de la zone ($17_2$) de laquelle la tête d'enregistrement (13) se rapproche, et en ce que dans le sens considéré la largeur des signaux du premier type ($16_1$) est progressivement décroissante et la largeur des signaux du second type ($16_2$) est progressivement croissante, la largeur maximale (au milieu de l'intervalle considéré) de deux signaux successifs de types différents ($16'_1$, $16'_2$) étant suffisamment faible par rapport à la largeur d'entrefer de la tête de lecture (13) pour que leur transition, non plus que les transitions entre les autres signaux, ne puisse être lue par la tête de lecture (13).

3. Support magnétique comportant au moins une piste portant des transitions d'états magnétiques telles que leur lecture fournit des impulsions dont le signe est représentatif du sens de la transition, caractérisé en ce que le support magnétique est obtenu par le fait que l'on enregistre dans l'intervalle compris entre deux transitions (14) de même sens des signaux ($16_1$, $16_2$) tels que leur lecture ne fasse pas apparaître une transition lisible de sens inverse, de sorte que toutes les transitions utiles et lisibles de la magnétisation d'une même piste d'asservissement apparaissent dans le même sens ( →← ou ←→ ).

4. Support magnétique selon la revendication 3, comportant au moins une piste portant des transitions d'états magnétiques telles que leur lecture fournit des impulsions dont le signe est représentatif du sens de la transition, caractérisé en ce qu'il présente dans l'intervalle compris entre deux transitions d'états magnétiques de même sens, des états magnétiques alternativement de deux types, à savoir d'un premier type ($16_1$) qui, lorsque l'on observe la piste (12) d'une transition à la suivante, est le même que celui de la zone ($17_1$) dont on s'éloigne, et d'un second type ($16_2$) qui, lorsque l'on observe la piste (12) dans le même sens, est le même que celui de la zone ($17_2$) dont on se rapproche, et en ce que dans le sens considéré la largeur des zones du premier type ($16_1$) est progressivement décroissante et la largeur des zones du second type ($16_2$) est progressivement croissante, la largeur maximale (au milieu de l'intervalle considéré) de deux zones successives de types différents ($16'_1$, $16'_2$) étant suffisamment faible par rapport à la largeur d'entrefer de la tête de lecture (13) pour que leur transition, non plus que les transitions entre les autres zones, ne puisse être lue par cette tête de lecture 13.

5. Procédé d'asservissement positionnel de têtes magnétiques, caractérisé en ce que l'on élabore les signaux de positionnement par la lecture :

     – de deux pistes consécutives (A et C) obtenues conformément au procédé des revendications 1 ou 2, de sorte à obtenir des transitions d'un premier type sur l'une des pistes et des transitions d'un second type, décalées par rapport aux précédentes, sur l'autre piste ; et

     – de deux pistes consécutives (B et D) obtenues conformément au procédé des revendications 1 ou 2, de sorte à obtenir des transitions d'un premier type sur l'une des pistes et des transitions d'un second type, décalées par rapport aux précédentes, sur l'autre piste ;

     ces pistes ayant été écrites par deux têtes magnétiques rigidement solidaires (18 pour les pistes A et C et 19 pour les pistes B et D), de telle manière qu'un décalage radial des têtes sur une distance égale à un quart de largeur de piste fasse passer la lecture d'une piste à la suivante (dans l'ordre alphabétique), alternativement par les deux têtes (18, 19) ;

     lesdits signaux de positionnement étant alors obtenus après amplification et détection du signe des signaux produits par lesdites têtes magnétiques.

## Ansprüche

1. Aufzeichnungs- und Wiedergabeverfahren für eine magnetische Spur, insbesondere zur Servo-Positionierung magnetischer Köpfe, wobei dazu diese Spur Übergänge von magnetischen Zuständen trägt, die so beschaffen sind, daß ihre Wiedergabe Impulse liefert, deren Vorzeichen die Übergangsrichtung darstellen, dadurch gekennzeichnet, daß man in dem zwischen zwei Übergängen (14) liegenden Intervall gleich ausgerichtete Signale ($16_1$, $16_2$) aufzeichnet, die so beschaffen sind, daß ihre Wiedergabe nicht als ein sichtbarer Übergang in entgegengesetzter Richtung erscheint, derart, daß alle verwert- und lesbaren Übergänge der Magnetisierung von einer gleichen Spur der Servo-Positionierung mit gleichem Richtungssinn erscheinen.

2. Verfahren nach Anspruch 1, dadurch gekennzeichnet, daß die in dem Intervall, welches zwischen zwei Übergängen mit gleichem Richtungssinn liegt, aufgezeichneten Signale wechselweise aus zwei Typen bestehen, nämlich aus einem ersten Typ ($16_1$), dessen magnetischer Zustand der gleiche ist wie der der Zone ($17_1$), von welcher der Aufzeichnungskopf (13) abweicht (der Aufzeichnungsträger der Magnetspur (12) ist verdeckt angeordnet), und aus einem zweiten Typ ($16_2$), dessen magnetischer Zustand der gleiche ist wie der der Zone ($17_2$), der sich der Aufzeichnungskopf (13) annähert, und dadurch, daß in der betrachteten Richtung die Breite der Signale des ersten Typs ($16_1$) allmählich abnimmt und daß die Breite der Signale des zweiten Typs allmählich zunimmt und daß die maximale Breite (in der Mitte des betrachteten Intervalls) von zwei unterschiedlichen, aufeinanderfolgenden Signalen ($16'_1$, $16'_2$) genügend gering in bezug auf die Breite des Luftspaltes des Aufzeichnungskopfes (13) ist, damit ihr Übergang nicht durch den Aufzeichnungskopf (13) und nicht mehr als die Übergänge zwischen den anderen Signalen gelesen werden können.

3. Magnetischer Aufzeichnungsträger mit wenigstens einer Spur, die magnetische Übergänge trägt, die so beschaffen sind, daß ihre Wiedergabe Impulse liefert, deren Signal die Übergangsrichtung darstellt, dadurch gekennzeichnet, daß der magnetische Aufzeichnungsträger dadurch bestimmt wird, daß man in dem zwischen zwei Übergängen (14) liegenden Intervall gleich ausgerichtete Signale ($16_1$, $16_2$) aufzeichnet, die so beschaffen sind, daß ihre Wiedergabe nicht als ein lesbarer Übergang in entgegengesetzter Richtung erscheint, so daß alle verwert- und lesbaren Übergänge der Magnetisierung von einer gleichen Spur der Servo-Positionierung mit gleichem Richtungssinn erscheinen.

4. Magnetischer Aufzeichnungsträger nach Anspruch 3, mit wenigstens einer Spur, die magnetische Übergänge trägt, die so beschaffen sind, daß ihre Wiedergabe Impulse liefert, deren Signal die Übergangsrichtung darstellt, dadurch gekennzeichnet, daß er in dem Intervall, welches zwischen zwei Übergängen mit magnetischen Zuständen mit gleichem Richtungssinn liegt, wechselweise zwei Typen vorsieht, nämlich einen ersten Typ ($16_1$), der, wenn man die Spur (12) des folgenden Überganges betrachtet, derselbe ist, wie der der Zone ($17_1$), von der man abweicht, und aus einem zweiten Typ ($16_2$), der, wenn man die Spur (12) in gleichem Richtungssinn betrachtet, derselbe ist, wie der der Zone ($17_2$), der man sich annähert, und dadurch, daß in der betrachteten Richtung die Breite der Zonen des ersten Typs ($16_1$) allmählich abnimmt und die Breite der Zonen des zweiten Typs ($16_2$) allmählich zunimmt und daß die maximale Breite (in der Mitte des betrachteten Intervalls) von zwei aufeinanderfolgenden Zonen verschiedenen Typs ($16'_1$, $16'_2$) genügend gering in bezug auf die Breite des Luftspaltes des Aufzeichnungskopfes (13) ist, damit ihr Übergang nicht durch den Aufzeichnungskopf (13) und nicht mehr als die Übergänge zwischen den anderen Signalen gelesen werden können.

5. Servo-Positionierungsverfahren für magnetische Köpfe, dadurch gekennzeichnet, daß man die Positionierungssignale verarbeitet durch die Wiedergabe von :

     – zwei aufeinanderfolgende Spuren (A und C) nach dem Verfahren der Ansprüche 1 oder 2 in der Weise, um Übergänge des ersten Typs auf eine der Spuren und Übergänge des zweiten Typs, die gegenüber der ersten auf eine andere Spur verschoben sind, zu erzielen ; und

– zwei aufeinanderfolgende Spuren (B und D) nach dem Verfahren der Ansprüche 1 oder 2 in der Weise, um Übergänge des ersten Typs auf eine der Spuren und Übergänge des zweiten Typs, die gegenüber der ersten auf eine andere Spur verschoben sind, zu erzielen ;

– diese Spuren werden mittels zwei fest miteinander verbundenen Köpfen aufgezeichnet, (18 für die Spuren A und C, und 19 für die Spuren B und D) in einer solchen Weise, daß eine Radialverschiebung der Köpfe auf eine Entfernung, die einem Viertel der Länge der Spur entspricht, zur Aufzeichnung von einer der folgenden Spuren (in alphabetischer Ordnung) abwechselnd von den zwei Köpfen (18 und 19) durchgeführt werden könnte ;

– die Positionierungssignale werden nun nach der Verstärkung und Detektion des Vorzeichens der von den magnetischen Köpfen produzierten Signale erhalten.

## Claims

1. A method of writing and reading a magnetic track, inter alia for the positional control of magnetic heads, for which purpose said track bears magnetic state transitions such that the reading thereof delivers pulses whose sign is representative of the direction of the transition, characterised in that signals $(16_1, 16_2)$ are recorded in the interval between two transitions (14) in the same direction, the signals being such that the reading thereof does not show a readable opposite-direction transition, so that all the useful and readable transitions of the magnetization of a given control track appear in the same direction.

2. A method according to claim 1, characterised in that the said signals recorded in the interval between two transitions in the same directions are alternately two types, namely a first type $(16_1)$ the magnetic state of which is the same as that of the zone (17,) away from which the recording head (13) is moving (the support for the magnetic track (12) being assumed to be passing), and a second type $(16_2)$ of which the magnetic state is the same as that of the zone (17$_2$) which the recording head (13) is approaching, and in that in the direction in question the width of the signals of the first type $(16_1)$ is progressively decreasing and the width of the signals of the second type $(16_2)$ is progressively increasing, the maximum width (at the middle of the interval in question) of two successive signals of different types $(16'_1, 16'_2)$ being sufficiently small with respect to the width of the airgap of the reading head (13) for their transition and the transitions between the other signals to be unreadable by the reading head (13).

3. A magnetic support comprising at least one track bearing magnetic state transitions such that their reading delivers pulses the sign of which is representative of the directfon of the transition, characterised in that the magnetic support is produced by recording signals $(16_1, 16_2)$ in the interval between two transitions (14) in the same direction, the signals $(16_1, 16_2)$ being such that the reading thereof does not show a readable opposite-direction transition, so that all the useful end readable transitions of the magnetisation of a given control track appear in the seme direction ( $\rightarrow\leftarrow$ or $\leftarrow\rightarrow$ ).

4. A magnetic support according to claim 3, comprising at least one track bearing magnetic state transitions such that reading thereof delivers pulses whose sign is representative of the direction of the transition, charecterised in that it has magnetic states of two types alternately in the interval between two magnetic state transitions in the same direction, namely : a first type $(16_1)$ which, when the track (12) is observed from one transition to the next, is the same as that of the zone $(17_1)$ being moved away from, and a second type $(16_2)$ which, when the track (12) is observed in the same direction, is the same as that of the zone $(17_2)$ being approached, and in that in the direction in question the width of the zones of the first type $(16_1)$ is progressively decreasing and the width of the zones of the second type $(16_2)$ is progressively increasing, the maximum width (at the middle of the interval in question) of two successive zones of different types $(16'_1, 16'_2)$ being sufficiently small with respect to the width of the air gap of the reading head (13) for their transition and the transitions between the other zones to be unreadable by said reading head (13).

5. A method for the positional control of magnetic heads, characterised in that the positioning signals are prepared by reading :

– two consecutive tracks (A and C) produced in accordance with the method of claim 1 or 2, so as to give transitions of a first type on one of the tracks and transitions of a second type, offset with respect to the previous transitions, on the other track ; and

– two consecutive tracks (B and D) produced according to the method of claim 1 or 2, so as to give transitions of a first type on one of the tracks and transitions of the second type offset with respect to the previous transitions on the other track; said tracks being written by two rigidly connected magnetic heads (18 in the case of tracks A and C and 19 in the case of tracks B and D) so that a radial offset of the heads over a distance equal to one-quarter of the track width causes reading to pass from one track to the next (in alphabetical order) alternately by the two heads (18, 19) ; said positioning signals then being produced after amplification and detection of the sign of the signals produced by said magnetic heads.

# FIG.1.

# FIG.2.

# FIG.9.

EP 0 233 815 B1

# F I G. 3.

# F I G. 4.

0233815

## FIG.5.

Am

espacement de
deux pistes
consécutives

I

I'

largeur
d'une piste

R

## FIG.6.

A    C              B        D

## FIG.7.

Am

S    I    J    S'

J

R₁    I'

décalage de
¼ de piste

R

# FIG.8.

fenêtre A          fenêtre B          fenêtre C          fenêtre D

EP 0 233 815 B1

# FIG.10.

$14_1$   $14_2$   $14_3$   $12$   $14_4$

$13$

# FIG.11.

$14_1$   $17_1$   $16_1$   $16'_2$   $16_1$   $16_1$   $16_2$   $17_2$   $12$   $14_2$

$13$

# FIG.12.

Am

$15_1$   $15_2$   $15_3$   $15_4$

t

EP 0 233 815 B1

# FIG. 13.

# FIG. 14.

# FIG. 15.

# FIG. 16.